# EUROPEAN PATENT SPECIFICATION

(11) **EP 3 988 412 B1**
(45) Date of publication and mention of the grant of the patent: **23.10.2024**
(21) Application number: 20844772.2
(22) Date of filing: 22.07.2020
(51) Int. Cl.: B60W 20/00, B60W 50/14, B60W 20/17, B60W 10/26, B60W 30/18

(54) **STRADDLED VEHICLE**
GRÄTSCHSITZFAHRZEUG
VÉHICULE DE TYPE À ENFOURCHER

(30) Priority: 24.07.2019 WO PCT/JP2019/028944
(43) Date of publication of application: 27.04.2022
(73) Proprietor: Yamaha Hatsudoki Kabushiki Kaisha, Iwata-shi, Shizuoka 438-8501 (JP)
(72) Inventor: HINO, Haruyoshi, Iwata-shi, Shizuoka 438-8501 (JP)
(74) Representative: Stöckeler, Ferdinand
(86) International application number: PCT/JP2020/028395
(87) International publication number: WO 2021/015225

(56) References cited:
- EP-A1- 2 034 607
- EP-A1- 3 301 280
- WO-A1-2014/064728
- JP-A- 2004 048 844
- JP-A- 2005 130 614
- JP-A- 2010 057 243
- JP-A- 2010 100 124
- JP-A- 2013 102 616
- JP-A- 2016 159 767
- US-A1- 2007 175 429

## Description

### [Technical Field]

This invention relates to a straddled vehicle.

### [Background Art]

It has been known that the running of a straddled vehicle is, for instance, assisted by providing a torque of a motor to an engine of the straddled vehicle.

A starter generator installed in an engine of a motorcycle or the like is disclosed in, for example, Patent Literature 1. The starter generator of Patent Literature 1 is connected to an AC/DC conversion circuit. The AC/DC conversion circuit includes a switching part that opens and closes a portion between each of the positive electrode and the negative electrode of the DC voltage source and each of the stator windings of the starter generator. A control device controls the switching part. The control device operates the switching part, thereby providing torque to a crankshaft using the starter generator as a motor. This starts an engine. Additionally, acceleration assist processing based on a rider's operation is executed.

The switching part executes an on/off operation. For example, the switching part is operated by PWM control or sine wave control. Due to this operation, the current is controlled. In addition, the torque of the starter generator is controlled.

EP 2 034 607 A1 teaches an electrically powered vehicle, in which, in a charge/discharge mode, an electronic control unit sets a carrier frequency of an inverter to a frequency higher than in a running mode.

JP2004 048844 A teaches an apparatus for controlling a vehicle which comprises setting high a carrier frequency of an inverter when an engine rotating speed sensed by an engine speed sensor is low, low when the engine rotating speed is high, high when a vehicle speed sensed by a vehicle speed sensor is low, and low when the vehicle speed is high.

JP 2013 102616 A discloses a vehicle in which a driver is informed of an operating state of a vehicle when the motor for running locks in a motor running mode by reducing the frequency to perform switching of a transistor of an inverter.

JP 2005 130614 A teaches a motor sound commanding unit which varies the switching frequency of an inverter depending on a driving situation, e.g. the starting time, turning time to the right or left, and reversing time of a vehicle.

EP 3 301 280 A1 teaches a straddled vehicle.

US 2007/175429 A1 teaches a combustion engine start controller for a vehicle, wherein, when the engine is in a starting operation, a switching frequency of an electric power converter is set to a frequency lower than that used when the engine is not in a starting operation.

JP 2016 159767 A discloses a vehicle in which the switching frequency of an inverter is set depending on a vehicle speed.

### [Citation List]

### [Patent Literature]

[Patent Literature 1] JP-B-5874315

### [Summary of Invention]

### [Problem to Be Solved by the Invention]

According to the configuration in Patent Literature 1, the switching part performs the on/off operation by PWM control or sine wave control on the basis of the rider's operation, whereby the power generation current and the torque required for acceleration assist processing can be controlled.

Straddled vehicles are lighter and more compact than automobiles.

Thus, the size of a motor or a battery that can be mounted to a straddled vehicle is limited. Thus, the rider's improved feeling of acceleration and the improved acceleration performance of a straddled vehicle are desired even when a motor and a battery having the same size are used.

An objective of this teaching is to illustrate a straddled vehicle that can provide a rider with an improved feeling of acceleration and improved acceleration performance of a straddled vehicle.

### [Solution to the Problem]

The present inventor has studied a relationship between the acceleration performance of a straddled vehicle and the rider's feeling of acceleration. A feeling of acceleration refers to a feeling of a straddled vehicle's acceleration that a rider can experience. Acceleration refers to a straddled vehicle's increase of speed amount per unit of time. A straddled vehicle runs at a higher speed by the acceleration than a speed before acceleration.

The present inventor has studied a relationship between the acceleration performance of a straddled vehicle and the rider's feeling of acceleration, and in this study, has focused on the operation of an inverter that supplies an electric current to a permanent magnet motor that assists the running of a straddled vehicle via its engine.

An inverter controls the current flow in a permanent magnet motor connected to an engine. A drive part is driven by an engine, for example, while the acceleration is being requested. At this time, an inverter allows a driving current to flow to a permanent magnet motor, and as a result, the permanent magnet motor can increase the rotatory power received by the drive part. That is, a permanent magnet motor can assist an engine's acceleration.

An inverter controls the current flowing between a battery and a permanent magnet motor by a switching operation. An inverter includes a switching part. A switching part is constituted of, for example, a transistor. A switching part of an inverter turns on or turns off at a shorter period than a period where a magnetic flux of a permanent magnet interlinks windings alternately in response to the rotation of a motor. That is to say, a period of the induced electromotive force generated in each winding. This thereby controls the current and torque of the motor. A switching part of an inverter performs the on/off operation at a carrier frequency used, for example, for modulation of PWM control or sine wave control. A frequency at which a switching part performs an on/off operation is called the operating frequency of an inverter.

Normally, the operating frequency of an inverter can be independently set on the basis of the rotation speed of a motor. Normally, the operating frequency of an inverter is set to a constant frequency, not depending on the rotation speed of a motor. When the on/off operation is performed at a constant frequency, that is, at a constant period, the current and the torque of a motor are controlled by controlling a duty ratio of an on-period and an off-period.

For example, a general operating frequency of an inverter is set in a range of over 20 kHz. The present inventor has experimented, setting the operating frequency of an inverter within a range of over 4 kHz and below 16 kHz. For instance, by reducing the operating frequency that was set to over 20 kHz to fall within a range of over 4 kHz and below 16 kHz, the operating frequency of an inverter is lowered.

When the operating frequency of an inverter lowers, the amount of switching losses in a switching part decreases. Thus, the efficiency of an inverter driving a permanent magnet motor is improved. As a result, the output that can be supplied from a permanent magnet motor and an engine during acceleration can be increased. That is, the rotatory power output from a permanent magnet motor and an engine to a drive part can be increased.

An engine of a straddled vehicle has low inertia and can be easily accelerated. Furthermore, a straddled vehicle is low in weight. Therefore, the improvement of the efficiency by the switching loss reduction tends to contribute to improvement of the straddled vehicle's acceleration performance. The operating frequency within the range of over 4 kHz and below 16 kHz facilitates the improvement of the acceleration performance of a straddled vehicle.

When the operating frequency of the inverter is within the range of over 4 kHz and below 16 kHz, the operation sound due to switching can be heard by the human ear.

The operation sound due to switching is generated from a permanent magnet motor as a sound source. More specifically, the operation sound due to switching is generated from motor windings through which a current flows and a stator core on which windings are wound, as sound sources. Additionally, the operation sound due to switching is generated from a switching part itself that performs an on/off operation as a sound source.

When the operating frequency of the inverter is within a range of over 20 kHz, an operation sound due to switching can be hardly heard by the human ear. When the operating frequency of the inverter becomes within a range of over 4 kHz and below 16 kHz, the operation sound due to switching can be heard by the human ear.

Since a rider of a straddled vehicle is exposed to the exterior, the rider has an acceleration feeling from changes in sound, vibration, and wind pressure in addition to the acceleration (gravitational acceleration) itself felt by the rider's body.

In a straddled vehicle, an engine and a motor are disposed near the rider, and the engine and the motor are at least partly placed in a position that can be seen from the exterior.

The frequency of an engine sound due to the combustion operation of an engine differs from the frequency of an operation sound due to switching, generated from a motor and an inverter. Therefore, both an engine sound due to the combustion operation and an operation sound due to switching can be heard by a rider as sounds with different audio pitches. Accordingly, the operation sound due to switching, generated from a motor and an inverter and overlapped with the engine sound can be heard by a rider. A sound in which the operation sound due to switching has been overlapped with an engine sound can be heard by a rider as a sound different from a sound only consisting of an engine sound due to a combustion operation.

Furthermore, an engine sound due to a combustion operation is a sound caused by motions of components, such as: the expansion and discharge of an air-fuel mixture, a reciprocating movement of a piston and a valve, a conversion in the direction of motion to the rotation of a crankshaft, and the vibration accompanied with the rotational fluctuation of a crankshaft. The operation sound due to switching is a sound caused by the vibration electromagnetically generated along with the fluctuation of a current flowing in windings and transistors. Accordingly, the overtone constitution of an engine sound due to a combustion operation differs from that of an operation sound due to switching because the generating mechanisms are different. Therefore, a rider can hear both an engine sound due to the combustion operation and an operation sound due to switching as sounds with different tones. Accordingly, the operation sound due to switching, generated from a motor and an inverter and overlapped with the engine sound can be heard by a rider. A sound in which the operation sound due to switching has been overlapped with an engine sound can be heard by a rider as a sound different from a sound only consisting of an engine sound due to a combustion operation.

The rider's feeling of acceleration can be improved by both an engine sound that can be heard during the acceleration of a straddled vehicle and an operation sound due to switching. That is, a rider can recognize that a motor assists the engine's acceleration when a sound generated from the motor and an inverter is overlapped with an engine sound.

In this way, the rider's feeling of acceleration can be improved while improving the acceleration performance of a straddled vehicle. The invention has been completed on the basis of the above knowledge.

The straddled vehicle according to the invention comprises:
an engine that has a crankshaft and configured to output power via the crankshaft;
a driving wheel configured to receive a rotatory power output from the engine via the crankshaft, thereby driving the straddled vehicle;
an acceleration instruction part configured to instruct acceleration of the straddled vehicle in accordance with a rider's operation;
a permanent magnet motor having a rotor directly or indirectly connected to the crankshaft so as to rotate in response to rotation of the crankshaft and a permanent magnet provided to the rotor;
a battery; and
an inverter provided with a plurality of switching parts configured to control a current that flows between the battery and the permanent magnet motor by switching operation, wherein
the straddled vehicle being configured to;
   control the engine such that a rotation speed of the engine increases while the acceleration instruction part is instructing acceleration,
   while the acceleration instruction part is instructing acceleration, change an operating frequency of the inverter such that the operating frequency of the inverter falls within a range over 4 kHz but below 16 kHz from the outside of the range to assist the engine's acceleration, thereby performing power-running control of the permanent magnet motor, to thereby control both the engine and the permanent magnet motor to accelerate the straddled vehicle.

According to the above configuration, the straddle vehicle includes an engine, a driving wheel, an acceleration instruction part, a permanent magnet motor, a battery, an inverter, and a control device.

The engine outputs power via the crankshaft. The driving wheel receives the rotatory power output from the engine via the crankshaft and drives the straddled vehicle. The acceleration instruction part instructs the acceleration in accordance with a rider's operation.

The permanent magnet motor includes a rotor and a permanent magnet. The rotor is directly or indirectly connected to the crankshaft so as to rotate in response to the rotation of the crankshaft. A permanent magnet is provided to the rotor. The inverter includes a plurality of switching parts. The plurality of switching parts control a current flowing between the battery and the permanent magnet motor by switching operation.

The control device controls the operation of the inverter. The control device controls the engine such that the rotation speed of the engine increases while the acceleration instruction part is instructing acceleration and changes the operating frequency of the inverter such that the operating frequency of the inverter falls within a range of over 4 kHz and below 16 kHz from the outside of the range, thereby performing power-running control of the permanent magnet motor.

Due to this operation, the operating frequency of the inverter changes from the outside of a range of over 16 kHz to a range of over 4 kHz and below 16 kHz to be within the range of over 4 kHz and below 16 kHz while the acceleration is being instructed.

Thus, the efficiency of the inverter driving the permanent magnet motor is improved. As a result, output that can be supplied from the permanent magnet motor and the engine during acceleration can be increased. That is, the rotatory power output from a permanent magnet motor and an engine to a drive part can be increased. The acceleration performance of the straddled vehicle tends to be improved.

When the operating frequency of the inverter is within a range of over 4 kHz and below 16 kHz while the acceleration is being instructed, the operation sound due to switching can be heard by the human ear. Moreover, the operation sound of switching is generated from components relating to power output, such as switching parts and windings of a motor as sound sources, not from a speaker or a buzzer. For example, as illustrated in the loudness curve of ISO 226, sounds having a frequency over 4 kHz are best heard by the human ear. A sound with a frequency of over 4 kHz and below 16 kHz can be easily heard by most people. When the operating frequency of the inverter becomes within a range of over 4 kHz and below 16 kHz, the operation sound can be easily heard by the human, including a rider. In a straddled vehicle, an engine and a motor are disposed near the rider, and the engine and the motor are at least partly placed in a position that can be seen from the exterior. The frequency band of an engine sound due to the combustion operation of an engine differs from the frequency band of the operation sound due to switching generated from a motor and an inverter. Accordingly, the operation sound due to switching, generated from the motor and the inverter and overlapped with an engine sound can be heard by a rider. In addition, an engine sound due to the combustion operation and an operation sound due to switching differ in tone because their generation mechanisms are different. From the above, the operation sound due to switching, generated from the motor and the inverter and overlapped with the engine sound can be heard by a rider.

According to the straddled vehicle having the above configuration, the rider's feeling of acceleration can be improved by both an engine sound, which can be heard during the acceleration of the straddled vehicle by both the engine and the permanent magnet motor, and an operation sound due to switching. That is, a rider can recognize that the motor assists the acceleration by the engine when a sound generated from the motor and the inverter is overlapped with an engine sound.

The rider's feeling of acceleration can be improved while improving the acceleration performance of the straddled vehicle.

In a preferred embodiment, the control device increases the operating frequency of the inverter from 0 kHz to be within the range of over 4 kHz and below 16 kHz when the acceleration instruction part instructs the acceleration in a state where the straddled vehicle is not in motion, thereby accelerating the straddled vehicle by both the engine and the permanent magnet motor.

According to the above configuration, the straddled vehicle is accelerated by both the engine and the permanent magnet motor. At this time, the inverter operating frequency that was 0 kHz in a state where the straddled vehicle is not in motion increases to fall within the range of over 4 kHz and below 16 kHz by an acceleration instruction. According to this configuration, the departure and the acceleration of the stopped straddled vehicle can be recognized. In addition, since the sound generated from the motor and the inverter is overlapped with the engine sound, it can be recognized that the motor assists the acceleration by the engine.

In a preferred embodiment, the control device decreases the operating frequency of the inverter from a range of over 16 kHz to the range of over 4 kHz and below 16 kHz when the acceleration instruction part instructs acceleration in a state where the straddled vehicle is motion.

According to the above configuration, the inverter operating frequency that was over 16 kHz decreases to be within the range of over 4 kHz and below 16 kHz by an acceleration instruction. Due to this configuration, the rider's feeling of acceleration during running can be increased.

In a preferred embodiment,

the straddled vehicle further comprises:
a display device configured to present a visual display, wherein
the control device changes
a display state of the display device while the acceleration instruction part is instructing acceleration.

According to the above configuration, the visual display state of the display device changes during the acceleration is being instructed. The visual display can facilitate distinguishing the displayed content from other displays on the basis of displayed states of color or shape. Accordingly, the rider's feeling of acceleration during running can be increased by the change of visual displays.

In a preferred embodiment, when the operating frequency of the inverter is within a range of over 4 kHz and below 16 kHz, the operating frequency of the inverter is increased to 16 kHz or higher when an acceleration instruction by the acceleration instruction part is stopped.

According to the above configuration, in response to the stop of the acceleration instruction, either the operation sound cannot be heard by the human ear or the magnitude of the operation sound that can be heard decreases. Due to this configuration, the feeling when acceleration is stopped can be improved, in addition to the rider's feeling of acceleration.

In a preferred embodiment, the control device changes the operating frequency of the inverter such that the operating frequency of the inverter falls within a range of over 4 kHz and below 16 kHz while the acceleration instruction part that has stopped the acceleration instruction is further instructing deceleration from the outside of the range.

According to the above configuration, a rider is informed in an easy-to-understand manner that the straddled vehicle conducts a regenerative operation during decelerated running when the operation sound is heard while the deceleration is instructed according to the operation, in addition to acceleration.

According to an example not belonging to the invention, the straddled vehicle may further comprise:
a regenerative display device configured to present a visual display in a mode different from the display device, wherein
the control device changes the display state of the regenerative display device while the acceleration instruction part that has stopped the acceleration instruction is further instructing deceleration.

According to the above configuration, a visual display state of the regenerative display device changes during the deceleration is being instructed in response to the operation. By changing the visual displays, a deceleration feeling in which the straddled vehicle is charged with regenerative energy while the straddled vehicle is decelerating is further improved in addition to acceleration.

The straddled vehicle is a vehicle in which a driver sits across the saddle. The straddled vehicle is a vehicle provided with a saddle sheet. The straddled vehicle has a driving wheel. For example, the straddled vehicle of this invention includes a motorcycle, a motor three-wheeler, and an ATV (All-Terrain Vehicle). For example, the straddled vehicle is a leaning vehicle. The leaning vehicle tilts in the vehicle's left direction when the vehicle turns left and tilts in the vehicle's right direction when the vehicle turns right. For example, the straddled vehicle does not include a cabin that encloses a rider.

For example, the straddled vehicle includes an engine and a permanent magnet motor. For example, the straddled vehicle includes an exposed engine unit. The exposed engine unit has an engine and a permanent magnet motor. At least a part of the exposed engine unit is exposed to the exterior of the straddled vehicle. For example, when the straddled vehicle includes an engine unit without an engine room for accommodating the engine unit, at least part of the exposed engine unit is exposed to the exterior of the straddled vehicle. The exposed engine unit has an engine body and a permanent magnet motor. For example, the exposed engine unit may further include a clutch and a transmission device. For example, the exposed engine unit includes a cylinder head, a cylinder, and a crankcase that constitute the skeleton of the engine body, and a cover that directly covers a rotor of the permanent magnet motor, and components integrally attached to these members in such a manner that the load is supported. For example, an exhaust muffler attached to a frame can maintain the arrangement when detached from a cylinder head. In this case, the exhaust muffler is not included in the engine unit.

For example, a part of the exposed engine unit other than the permanent magnet motor may be exposed to the exterior of the straddled vehicle. This is because the vibration of the permanent magnet motor due to current can be transmitted to a part of the exposed engine unit other than the permanent magnet motor. However, for example, when at least a part of the permanent magnet motor is exposed, a larger sound than a case where the part is not exposed is output to a rider.

The engine has a piston and a crankshaft. For example, the crankshaft includes a crankshaft connected to a piston by a connecting rod and a crankshaft connected to a piston via a connecting rod and a further different member. The crankshaft is configured to convert the reciprocating movement of the piston into the rotating movement and transmit the rotating movement to the crankshaft.

For example, the engine of this invention includes a four-stroke engine and a two-stroke engine.

For example, the engine has a high load region where the load for rotating the crankshaft is higher and a low load region where the load for rotating the crankshaft is lower than the load of the high load region TH among the four strokes.

An engine having a high load region and a low load region shows a large rotation speed fluctuation in the four strokes. Thus, increasing the rotation speed due to an acceleration instruction may be hard to recognize. Even in this case, a rider's feeling of acceleration can be improved by the sound due to the current flowing in the permanent magnet motor.

A single-cylinder engine has a narrower high load region than an engine having two or more cylinders. That is, a single-cylinder engine has a wider low load region.

However, the engine may have three or more cylinders.

The permanent magnet motor is a motor having a permanent magnet. The permanent magnet motor includes a stator and a rotor. The rotor of the permanent magnet motor includes a permanent magnet. The rotor of the permanent magnet motor does not include windings. The stator of the permanent magnet motor includes windings. The permanent magnet motor includes windings corresponding to a plurality of phases. For example, the permanent magnet motor may include windings corresponding to two phases or four phases. However, for example, the permanent magnet motor may easily perform vector control and phase control by providing windings corresponding to three phases. The windings of the stator are wound around a stator core. The rotor rotates such that the permanent magnet faces the stator core via air gaps. The permanent magnet motor includes a radial gap motor and an axial gap motor. The permanent magnet motor includes, as a radial gap motor, an outer rotor motor provided with a rotor rotating outward of the stator and an outer rotor motor provided with a rotor rotating inward of the stator.

For example, the permanent magnet motor may generate electric power. For example, the permanent magnet motor is a permanent magnet motor having a function as an electric power generator. In addition, the permanent magnet motor includes a permanent magnet motor not having a function as an electric power generator.

For example, the rotor of the permanent magnet motor directly or indirectly connected to the crankshaft is a rotor mechanically connected such that the power of the crankshaft is always transmitted. For example, the rotor of the permanent magnet motor includes a rotor directly connected to a crankshaft and a rotor indirectly connected to a crankshaft via a transmission mechanism. For example, the transmission mechanism is a belt, a chain, a gear, a speed reducer, a speed increaser, or the like. The rotor of this invention is preferably connected to the crankshaft so as to rotate at a fixed speed ratio in relation to the crankshaft.

The inverter includes a plurality of switching parts that control the current output from the battery to the permanent magnet motor.

For example, the switching part is a transistor. For example, the switching part includes a FET (Field Effect Transistor), a thyristor, and an IGBT (Insulated Gate Bipolar Transistor). For example, an inverter has a bridge inverter constituted of a plurality of switching parts.

For example, the control device includes a control device that controls the operation of the engine. However, the control device includes, for example, another control device other than a device that controls the operation of the engine.

Acceleration of the straddle vehicle means increasing the running speed of the straddled vehicle per unit of time. Accordingly, the straddled vehicle is running at least just after the start of the acceleration of the straddled vehicle. For example, the acceleration of the straddle vehicle can be referred to as accelerated running or the straddled vehicle. For example, a simple increase of the driving torque of the driving wheel is not the acceleration of the straddled vehicle when the straddled vehicle does not run.

The acceleration instruction part is means for instructing the acceleration of the straddled vehicle. In other words, the acceleration instruction part is means for instructing the increased amount of the engine torque. For example, the acceleration instruction part of this invention is operated by a driver. For example, the acceleration instruction part is an accelerator grip. In this case, the position in rotation of the accelerator grip indicates the operation amount of the acceleration instruction part. For example, the acceleration instruction part includes a pedal, a lever, and a switch.

Note that, for example, the acceleration instruction part includes a device that is not displaced by an operation. Examples of such an acceleration instruction part include an acceleration instruction part configured such that the magnitude of the power applied to the acceleration instruction part indicates the operation amount of the acceleration instruction part. Furthermore, the acceleration instruction part may be configured such that not only the acceleration of the straddled vehicle but also the deceleration of the straddled vehicle can be instructed. In this case, the operation amount of the acceleration instruction part relating to the acceleration of the straddled vehicle corresponds to the "operation amount of the acceleration instruction part".

The acceleration instruction part is configured such that as the operation amount of the acceleration instruction part is larger, the increasing amount of the engine torque instructed by the acceleration instruction part is larger. In other words, the acceleration instruction part is configured such that as the operation amount of the acceleration instruction part is larger, the engine torque instructed by the acceleration instruction part is larger. Still, in other words, the acceleration instruction part is configured such that as the operation amount of the acceleration instruction part is larger, the increasing amount in the opening degree of the throttle valve instructed by the acceleration instruction part is larger. The acceleration instruction part is configured such that as the increasing speed of the operation amount of the acceleration instruction part is larger, the acceleration of the straddled vehicle instructed by the acceleration instruction part is larger.

For example, the case where "the acceleration instruction part is instructing acceleration" may refer to the operation amount of the acceleration instruction part exceeding a certain fixed limit operation amount. For example, the case where "the acceleration instruction part is instructing acceleration" may refer to the operation amount of the acceleration instruction part exceeding an operation amount determined, compared to the operation amount before a specific time. That is, the case where "the acceleration instruction part is instructing acceleration" may refer to whether the increasing speed of the operation amount of the acceleration instruction part is equal to or higher than the fixed limit speed.

`Changing the operating frequency of the inverter from the outside of a predetermined range to fall within the predetermined range when the acceleration instruction part is instructing the acceleration' includes `always changing the operating frequency of the inverter from the outside of a predetermined range to fall within the predetermined range over a period while the acceleration instruction part is instructing the acceleration'. `Changing the operating frequency of the inverter from the outside of a predetermined range to fall within the predetermined range when the acceleration instruction part is instructing the acceleration' includes `changing the operating frequency of the inverter from the outside of the predetermined range to fall within the predetermined range over a part of a period while the acceleration instruction part is instructing the acceleration'.

Furthermore, `changing the operating frequency of the inverter from the outside of a predetermined range to fall within the predetermined range' includes 'changing the frequency from the outside of the predetermined range to fall within the predetermined range and then maintaining the frequency at a constant frequency within the predetermined range'. Furthermore, `changing the operating frequency of the inverter from the outside of a predetermined range to fall within the predetermined range' includes `changing the frequency from the outside of the predetermined range to fall within the predetermined range and then varying the frequency within the predetermined range'.

When the control device allows the inverter to operate at an operating frequency within a range of over 4 kHz and below 16 kHz, for example, the control device allows the permanent magnet motor to drive the crankshaft. The control device allows the permanent magnet motor to be in a power-running state. However, the control device is not limited to this, and for example, when the inverter is operated at an operating frequency within a range of over 4 kHz and below 16 kHz, the control device allows the crankshaft to drive the permanent magnet motor. This allows the permanent magnet motor to be a power-generating state. Note that whether the permanent magnet motor becomes a power-running state or a power-generating state depends on the rotation speed of the permanent magnet motor and the phase of the current flowing from the switching part in response to the induced electromotive voltage accompanied with rotation. The control device can switch between the power-running state and the power-generating state of the permanent magnet motor by changing the phase. However, for example, the control device may be operated only in a permanent magnet motor-power-running state, not through a permanent magnet motor-power-generating state.

A sound caused by the current that flows in the permanent magnet motor occurs when at least a part of the permanent magnet motor rumbles by the switching current. The operation sound may be heard not only by a rider but also by a person around the straddled vehicle.

The display states of the display device change while the acceleration instruction part is instructing the acceleration. For example, a period during which the display states of the display device change and a period during which the operating frequency of the inverter is included within a range of over 4 kHz and below 16 kHz overlap with each other.

However, the timing at which the display states of the display device change may differ from the timing at which the operating frequency of the inverter changes. For example, the timing at which the display states of the display device change may be substantially identical to the timing at which the operating frequency of the inverter changes.

Furthermore, the straddled vehicle may include a display device (for example, referred to as a regenerative display device), the display states of which change in a mode different from the above display device which the acceleration instruction part instructs deceleration. For example, the different mode in a display state refers to the display positions differing from one another. However, for example, as a different mode, the color while the acceleration is being instructed and the color while the deceleration is being instructed may be different. In this case, the display positions may be the same as or different from one another. Alternatively, as a different mode, for example, the shape of a graphic symbol displayed while the acceleration is being instructed and the shape of a graphic symbol displayed while deceleration is being instructed may be different. For example, the arrow displayed may be in a different direction, or the flashing part may be moved in a different direction.

Note that the straddled vehicle may only include a display device that changes the display while the acceleration is being instructed and may not include a display device that changes the display while deceleration is being instructed. The opposite relationship may be accepted. Furthermore, the straddled vehicle may not include a display device corresponding to any of the above.

For example, the inverter's operating both at an operating frequency within a range of over 4 kHz and below 16 kHz and the outside of the range refers to having both (a) a period operating at a frequency within a range of over 4 kHz and below 16 kHz and (b) a period operating at a frequency of 4 kHz or lower. However, a frequency range out of the above range is not particularly limited, and for example, having both (a) a period operating at a frequency within a range of over 4 kHz and below 16 kHz and (c) a period operating at a frequency of 16 kHz or higher may be allowable. As the frequency range, for example, having (a) a period operating at a frequency within a range of over 4 kHz and below 16 kHz, (b) a period operating at a frequency of 4 kHz or lower, and (c) a period operating at a frequency of 16 kHz or higher may be allowable. Note that when the switching operation in the inverter stops, the operating frequency is 0 Hz. This case is included in the operation at a frequency of 4 kHz or lower.

The engine sound due to the combustion operation of the engine during accelerated running mainly includes a component of 40 Hz or higher and below 4 kHz. When the inverter operates at an operating frequency within a range of over 4 kHz and below 16 kHz, a rider can distinguish and recognize the engine sound due to the combustion operation and the sound due to the operating frequency of the inverter as sounds having different pitches. That is, a rider can recognize that a motor assists the acceleration by an engine when a sound generated from the motor and an inverter is overlapped with an engine sound.

For example, when the inverter operates at an operating frequency within a range of over 5 kHz and below 16 kHz, the frequency of the sound generated from the motor and the inverter is separated from the frequency band including the main components of the engine sound in their pitches. For this reason, for example, even a rider who is less sensitive to the difference in pitch can distinguish and recognize the engine sound due to the combustion operation and the sound due to the operating frequency of the inverter as sounds having different pitches. That is, a wider range of riders can recognize that a motor assists the acceleration by an engine when a sound generated from the motor and the inverter is overlapped with an engine sound.

The terminology used herein is for the purpose of defining only specific embodiments and is not intended to limit the invention.

The term "and/or" used in the present description includes any or all combinations of one or a plurality of related and listed components.

When used in the present description, the use of the terms "including", "comprising" or "having" and the variations thereof specifies the presence of the described characteristics, processes, operations, elements, factors, and/or equivalents thereof and may include one or a plurality of steps, functions, components and/or groups thereof.

When used in the present description, the terms "attached", "joined", and/or equivalents thereof are widely used, and unless otherwise specified, the terms include both direct and indirect attachment and joining.

Unless otherwise defined, all terms (including technical terms and scientific terms) used in the present description have the same meanings as commonly understood by a skilled person to whom this teaching belongs.

A term as defined in common dictionaries is to be interpreted to have a meaning corresponding to the meaning in the related art and in the context of the present description, and unless explicitly defined in the present description, the term is never interpreted as an ideal or an excessively formal meaning.

In the explanation of this invention, it is to be understood that the number of techniques and steps are described.

Each of these has an individual benefit, and each may be used together with at least one of, or in some cases, all of the other disclosed techniques.

Thus, for clarity, this explanation refrains from unnecessarily repeating all possible combinations of individual steps.

In the present description, a new straddled vehicle is described.

A large number of specific details for providing a complete understanding of this invention will be described in the following explanations for the purpose of explanation.

However, it is apparent that a person skilled in the art can implement this invention even without these specific details.

The present description should be understood as an illustration of this teaching and is not intended to limit any specific embodiment expressed by the following drawings and explanations.

### [Effect of the Invention]

According to this invention, a straddled vehicle that can provide a rider with an improved feeling of acceleration as well as improved acceleration performance of a straddled vehicle can be achieved.

### [Brief Description of Drawings]

Fig. 1 is a diagram illustrating an outline of a straddled vehicle according to one embodiment of this teaching.
Fig. 2 is an external view illustrating the straddled vehicle according to an application example illustrated in Fig. 1.
Fig 3 is a partial sectional view schematically illustrating a schematic configuration of an engine unit illustrated in Fig. 2.
Fig. 4 is an explanatory view schematically illustrating the relationship between the crank angle position of an engine and the required torque.
Fig. 5 is a sectional view illustrating a section perpendicular to the rotation axis of the permanent magnet motor illustrated in Fig. 3.
Fig. 6 is a block diagram illustrating an electrical schematic configuration of the straddled vehicle illustrated in Fig. 2.
Fig. 7 is a diagram illustrating an example of waveforms of the current and the voltage in control.
Fig. 8 is a flowchart for explaining the operation of the straddled vehicle illustrated in Fig. 2.

### [Description of Embodiments]

Hereinafter, this teaching is explained on the basis of a preferred embodiment with reference to the drawings.

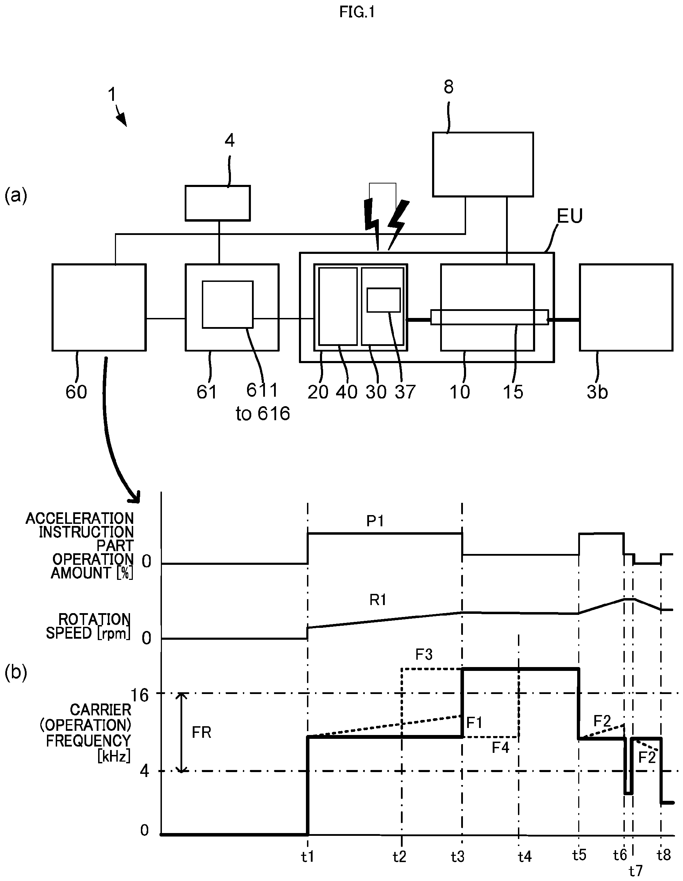

Fig. 1 is a diagram illustrating an outline of a straddled vehicle according to one embodiment of this teaching. The part (a) of Fig. 1 is a block diagram illustrating a schematic configuration of the straddled vehicle. The part (b) of Fig. 1 is a timing diagram illustrating an example of a change of the operating frequency of the inverter.

For example, the straddled vehicle 1 is a leaning vehicle. The leaning vehicle tilts in the vehicle's left direction when the vehicle turns left and tilts in the vehicle's right direction when the vehicle turns right. For example, the straddled vehicle 1 is a motorcycle or a motor three-wheeler. For example, ATV may be adopted as the straddled vehicle 1.

The straddled vehicle 1 includes an engine 10, a driving wheel 3b, an acceleration instruction part 8, a permanent magnet motor 20, a battery 4, an inverter 61, and a control device 60. The straddled vehicle 1 includes an exposed engine unit EU. The exposed engine unit EU has an engine 10 and a permanent magnet motor 20.

The straddled vehicle 1 does not have any vehicle interior. Furthermore, the straddled vehicle 1 does not have any engine room for housing the engine 10, the permanent magnet motor 20, and the inverter 61. Accordingly, the engine 10, the permanent magnet motor 20, and the inverter 61 are not housed in an engine room. That is, the exposed engine unit EU is not housed in an engine room.

The engine 10 is an internal combustion engine. The engine 10 has a crankshaft 15. The crankshaft 15 rotates by gas combustion in the engine 10. The engine 10 outputs power via the crankshaft 15. The crankshaft 15 outputs the rotatory power as the power.

The driving wheel 3b receives the rotatory power output from the engine 10 and the permanent magnet motor 20 via the crankshaft 15 and drives the straddled vehicle 1. The driving wheel 3b receives the rotatory power output from the engine 10 and the permanent magnet motor 20 via a power transmission device, for example, such as a transmission device or a clutch. The driving wheel 3b receives the rotatory power output from the permanent magnet motor 20 via a clutch.

The acceleration instruction part 8 instructs the acceleration in response to the operation. For example, the acceleration instruction part 8 is an accelerator grip disposed on a steering. For example, an accelerator pedal may be adopted as the acceleration instruction part 8. When the acceleration instruction part 8 is operated, the amount of gas supplied to the engine 10 increases. As a result, the power output from the engine 10 via the crankshaft 15 increases. For example, the rotation speed of the crankshaft 15 is increased.

The permanent magnet motor 20 includes a rotor 30 and a stator 40. The rotor 30 has a permanent magnet 37. The rotor 30 is connected to the crankshaft 15 so as to rotate in response to the rotation of the crankshaft 15. For example, the rotor 30 is indirectly connected to the crankshaft 15. Alternatively, the rotor 30 may be indirectly connected to the crankshaft 15. The permanent magnet 37 is provided to the rotor 30.

The inverter 61 includes a plurality of switching parts 611 to 616. The plurality of switching parts 611 to 616 control the current flowing between the battery 4 and the permanent magnet motor 20 by switching operation switching on and off.

The control device 60 controls the operation of the inverter 61. The control device 60 controls the operation of the switching parts 611 to 616.

The control device 60 supplies a current according to the target value to the permanent magnet motor 20 by switching operation. The control device 60 controls on and off of the switching parts 611 to 616 by PWM control (including sine wave control).

By the PWM control of the control device 60, the switching parts 611 to 616 turn on and turn off in response to the pulse of the frequency higher than the frequency of the induced electromotive voltage. The control device 60 controls the current and the torque of the permanent magnet motor 20 by controlling the duty ratio between an on-period and an off-period. The control device 60 modulates the value according to the target value with a carrier signal. The carrier signal is a signal having a frequency higher than the induced electromotive voltage.

Sine wave control is one kind of PWM control. In sine wave control, the duty ratio changes at a frequency of the induced electromotive voltage such that a sine wave current can flow in the windings of the permanent magnet motor 20.

A frequency at which the control device 60 controls the on and off of the switching parts 611 to 616 in the PWM control is called an operating frequency or a carrier frequency of the inverter 61. The operating frequency may also be used in control other than PWM control.

The control device 60 also controls the engine 10. However, a part in charge of the control of the engine 10 and a part in charge of the control of the permanent magnet motor 20 in the control device 60 may be respectively mounted to mutually different control boards. Alternatively, a part in charge of the control of the engine 10 and a part in charge of the control of the permanent magnet motor 20 may be installed at mutually separated positions in the straddled vehicle 1.

The control device 60 changes the operating frequency of the inverter 61 such that the operating frequency of the inverter 61 falls within a range of over 4 kHz and below 16 kHz from the outside of the range while the acceleration instruction part 8 is instructing the acceleration.

The outside of the range is a range within 0 kHz or higher and 4 kHz or lower or a range of 16 kHz or higher of the operating frequency of the inverter 61. For example, when the inverter 61 stops operation, on and off states do not change and thus, the operating frequency is substantially 0 kHz.

For example, when the operating frequency of the inverter 61 is within a range of 0 kHz or higher and 4 kHz or lower, the control device 60 increases the operating frequency of the inverter 61 to fall within a range of over 4 kHz and below 16 kHz while the acceleration instruction part 8 is instructing the acceleration.

For example, when the operating frequency of the inverter 61 is within a range of 15 kHz or higher, the control device 60 decreases the operating frequency of the inverter 61 to be within a range of over 4 kHz and below 16 kHz while the acceleration instruction part 8 is instructing the acceleration.

Note that the control device 60 may switch between a mode for turning on and turning off the switching parts 611 to 616 in response to the pulse of a frequency higher than the frequency of an induced electromotive voltage and a mode for turning on and turning off the switching parts 611 to 616 at a frequency of the induced electromotive voltage by PWM control. A mode for turning on and turning off the switching parts 611 to 616 at a frequency of the induced electromotive voltage is referred to as a phase control mode. In a phase control mode, modulation by a carrier signal is not performed. In this case, the frequency of the switching parts 611 to 616 is not a carrier frequency but merely an operating frequency. For example, according to a phase control mode, the switching parts 611 to 616 can be efficiently operated when the induced electromotive voltage exceeds the voltage for controlling the switching parts 611 to 616. A phase control mode can be used in electric power generation during running at a high engine rotation speed.

The operating frequency decreases to 4kHz or lower when the inverter 61 transfers from a state where the inverter 61 operates within a range of 0 kHz or higher and 4 kHz or lower by PWM control to a phase control mode. That is, the operating frequency of the inverter 61 changes from a range of over 4 kHz and below 16 kHz to the outside of the range.

For example, when the acceleration instruction part 8 instructs acceleration in a state where the control device 60 turns on and turns off the switching parts 611 to 616 at an operating frequency of 4 kHz or lower in a phase control mode, the control device 60 increases the operating frequency of the inverter 61 to be within the range of over 4 kHz and below 16 kHz.

However, a configuration in which a phase control mode is not performed may be adopted as the control device 60.

As the control device 60, a configuration that changes the operating frequency of the inverter 61 such that the operating frequency of the inverter 61 falls within a range of over 4 kHz and below 16 kHz from the outside of the range while the acceleration instruction part 8 is instructing the deceleration may be adopted. For example, an instruction of the deceleration by the acceleration instruction part 8 is a case where the operation amount of the acceleration instruction part 8 during the running of the straddled vehicle 1 is zero.

The part (b) in figure 1 illustrates an example of the operation amount P1 of the acceleration instruction part 8, the rotation speed R1 of the engine 10, and the variation of the operating frequency (carrier frequency) F1 of the inverter 61.

The operation of the inverter 61 stops before the timing t1 in an example of the part (b) in Fig. 1. Accordingly, the operating frequency F1 of the inverter 61 is 0 kHz. The combustion operation of the engine 10 also stops before the timing t1 in an example of the part (b) in Fig. 1. That is, a state before the timing t1 indicates an idling stop state of the engine 10, for example.

In an example of part (b) in Fig. 1, the acceleration instruction part 8 is operated by a rider at the timing t1, and the acceleration of the straddled vehicle 1 is instructed. The operation of the acceleration instruction part 8 by a rider stops at the timing t3, the acceleration instruction to the straddled vehicle 1 stops. In an example of the part (b) in Fig. 1, it is determined that the acceleration of the straddled vehicle 1 is instructed when the operation amount of the acceleration instruction part 8 exceeds an acceleration standard.

When the acceleration of the straddled vehicle 1 is instructed at the timing t1, the control device 60 operates the inverter 61 such that sound due to the current that flows in the permanent magnet motor 20 will be output from the permanent magnet motor 20. The control device 60 operates the inverter 61 at an operating frequency F1 within the range FR of over 4 kHz and below 16 kHz FR. Due to this operation, the operating frequency of the inverter 61 changes from the outside of the range FR such that the operating frequency F1 of the inverter 61 will be within the range of over 4 kHz and below 16 kHz while the acceleration instruction part 8 is instructing the acceleration.

When the acceleration of the straddled vehicle 1 is instructed at the timing t1, the permanent magnet motor 20 drives the crankshaft 15 of the engine 10 by the operation of the inverter 61. The engine 10 starts combustion operation, and the rotation speed R1 increases.

Acceleration of the straddled vehicle 1 is instructed even after the timing t1. The rotation speed R1 of the engine 10 continues increasing. The straddled vehicle 1 is accelerated. More specifically, the straddled vehicle 1 changes from a stopped state to an accelerated state and continues running while being accelerated. The air and the fuel supplied to the engine 10 also increase. Both the engine 10 and the permanent magnet motor 20 accelerates the straddled vehicle 1.

The control device 60 operates the inverter 61 at an operating frequency F1 within the range FR of over 4 kHz and below 16 kHz FR. Even after the engine 10 starts the combustion operation, the permanent magnet motor 20 is made to drive the crankshaft 15. Due to this operation, the action of the engine 10 is assisted by the permanent magnet motor 20. The straddled vehicle 1 is accelerated.

The operation sound of switching is generated from components relating to power output, such as the stator windings W of the permanent magnet motor 20, as sound sources. In this way, the sound is output from the exposed engine unit EU having the permanent magnet motor 20.

The operation sound of switching may also be generated from the switching parts 611 to 616 and wirings connecting the switching parts 611 to 616 and the permanent magnet motor 20.

When the instruction of acceleration of the straddled vehicle 1 is stopped at the timing t3, the control device 60 increases the operating frequency F1 of the inverter 61 from within the range FR of over 4 kHz and below 16 kHz to a range of 16 kHz or higher. Due to this operation, when the instruction of acceleration of the straddled vehicle 1 is stopped, the operating frequency F 1 of the inverter 61 changes from within the range FR of over 4 kHz and below 16 kHz to the outside of the range FR.

As a result, the operation sound cannot be heard by the human ear or the magnitude of the operation sound that can be heard by the human ear is reduced.

In the example of the part (a) in Fig. 1, the engine 10 maintains the combustion operation even after the instruction for the acceleration of straddled vehicle 1 stops at the timing t3. As a result, the permanent magnet motor 20 is driven by the crankshaft 15. The permanent magnet motor 20 shifts to an electric power-generating state by this operation.

As described above, the operating frequency of the inverter 61 changes from the outside of the range of over 4 kHz and below 16 kHz to be within the range of over 16 kHz to a range of over 4 kHz and below 16 kHz while the acceleration is being instructed during a period from the timings t1 to t3. When the operating frequency of the inverter 61 is within a range of over 4 kHz and below 16 kHz, the switching operation sound that is not directly related to the rotation speed of the permanent magnet motor 20 can be heard by the human ear.

Accordingly, the operation sound of switching can be heard by the human ear while the straddled vehicle 1 is running and the acceleration is being instructed.

The operation sound of switching is generated from components relating to power output, such as switching parts 611 to 616 and windings of the permanent magnet motor 20 as sound sources, not from a speaker or a buzzer. For example, as illustrated in the loudness curve of ISO 226, sounds having a frequency over 4 kHz are best heard by the human ear. A sound with a frequency of over 4 kHz and below 16 kHz can be heard by most people. When the operating frequency of the inverter becomes within a range of over 4 kHz and below 16 kHz, the operation sound can be easily heard by the human, including a rider. The straddled vehicle 1 does not have any enclosed cabin, unlike automobiles. The operation sound can be easily heard by people around the straddled vehicle.

The main component of the sound due to the operation of the engine is a sound due to combustion. For example, the combustion frequency of an engine rotating at 12000 rpm is 100 revolutions per second. Components such as a crankshaft and a valve operate at a frequency of twice or four times the combustion of an engine. The sound of a frequency of an integral multiple of the resonance frequency generates by the resonance of an engine unit or the like. The main components of sound due to the operation of the engine have a component of below 4 kHz. In this way, the frequency of sound due to the combustion of an engine differs from the range of over 4 kHz and below 16 kHz. The overtone composition of sound due to combustion of an engine differs from the overtone composition of operation sound due to switching, generated from the permanent magnet motor 20 and the inverter 61. Accordingly, the operation sound due to switching, generated from the permanent magnet motor 20 and the inverter 61 and overlapped with the engine sound can be heard by a rider. When the straddled vehicle 1 runs and allows the operation sound to be heard by a rider while the acceleration is instructed in response to the operation, a feeling of acceleration, in which the straddled vehicle 1 is running while being accelerated in an easy-to-understand manner even while the rider is driving, can be conveyed to the rider.

In addition, persons around the straddled vehicle 1, for example, pedestrians and riders or drivers of a vehicle running in the surroundings, can be informed that the straddled vehicle 1 is running while being accelerated in an easy-to-understand manner.

The operation sound cannot be heard by the human ear or the magnitude of the operation sound that can be heard by the human ear is reduced when the acceleration instruction is stopped. Accordingly, a rider can be informed that the acceleration is finished in an easy-to-understand manner while driving.

In the part (b) of Fig. 1, an example of a switching operation different from the above operation is illustrated as broken lines.

For example, as illustrated in F2, the operating frequency (switching frequency) (F2) may gradually increase during the period while the acceleration is being instructed.

Alternatively, for example, as illustrated in F3, the operating frequency (F3) of the inverter may change from the range FR of over 4 kHz and below 16 kHz to the outside of the range FR in the middle of the period during which the acceleration instruction is continuing.

A rider can be informed of the acceleration even in this case.

By changing the operating frequency (F3) to the outside of the range FR, the switching loss is reduced, and a highly efficient switching frequency can be selected.

For example, the operating frequency (F3) may be changed to the outside of the range FR at a predetermined time after the start of the acceleration instruction.

Alternatively, for example, as illustrated in F4, the operating frequency (F4) of the inverter may be maintained within the range FR of over 4 kHz and below 16 kHz even after the acceleration instruction is stopped.

A rider can be informed that the vehicle is accelerated in an easy-to-understand manner even in this case. A rider can be informed that the vehicle is accelerated in an easy-to-understand manner over time, even when a period of acceleration instruction is short.

For example, the operating frequency (F4) may be changed to the outside of the range FR at a predetermined time after the start of the acceleration instruction.

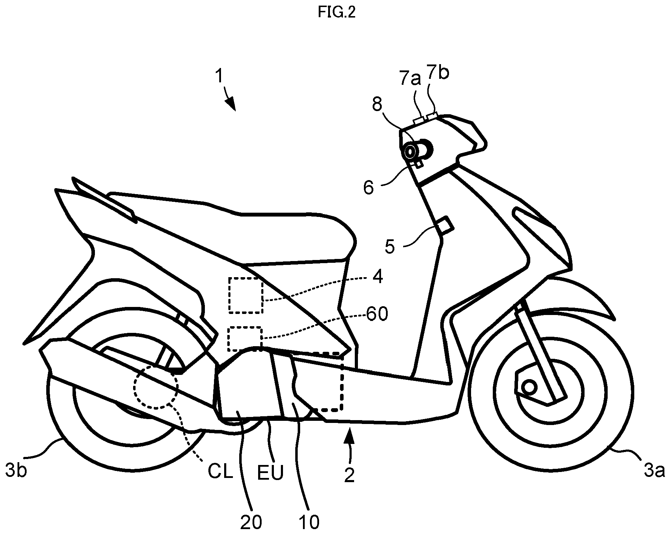

Fig. 2 is an external view illustrating the straddled vehicle according to an application example illustrated in Fig. 1.

The straddled vehicle 1 illustrated in Fig. 2 includes a vehicle body 2 and wheels 3a and 3b. Specifically, the straddled vehicle 1 is a motorcycle.

The straddled vehicle 1 includes an exposed engine unit EU. The exposed engine unit EU includes an engine 10 and a permanent magnet motor 20. At least a part of each of the engine 10 and the permanent magnet motor 20 unit is exposed to the exterior of the straddled vehicle 1. More specifically, illustrated in Fig. 2 are a motor cover, a part of the permanent magnet motor 20, and a crankcase, a part of the engine 10.

The rear wheel 3b is a driving wheel. The wheel 3b receives the rotatory power output from the engine 10 and drives the straddled vehicle 1.

The straddled vehicle 1 includes a main switch 5. The main switch 5 is a switch for supplying the electric power to respective parts of the straddled vehicle 1. The straddled vehicle 1 includes a starter switch 6. The starter switch 6 is a switch for starting the engine 10. The straddled vehicle 1 includes an acceleration instruction part 8. The acceleration instruction part 8 is an operator for instructing the acceleration of the straddled vehicle 1 in response to the operation. The acceleration instruction part 8 displaces in response to the operation. More specifically, the acceleration instruction part 8 is an accelerator grip. The acceleration instruction part 8 rotates in response to the operation. The acceleration instruction part 8 is also operated for starting the engine 10 when the engine 10 stops.

The straddled vehicle 1 includes a battery 4. The straddled vehicle 1 includes the control device 60 that controls respective parts of the straddled vehicle 1.

The straddled vehicle 1 includes an assist display device 7a and a regenerative display device 7b. The assist display device 7a and the regenerative display device 7b perform visual displays. The assist display device 7a is configured to change display states while the acceleration instruction part 8 is instructing the acceleration. For example, the assist display device 7a is a light that lights up while the acceleration instruction part 8 is instructing the acceleration. The regenerative display device 7a is configured to change display states while the acceleration instruction part 8 is instructing deceleration. The regenerative display device 7b displays in a mode different from the assist display device 7a. For example, the regenerative display device 7b and the assist display device 7a are arranged in different positions. Thus, the position where the display changes while the acceleration is being instructed and the position where the display changes while deceleration is being instructed are different.

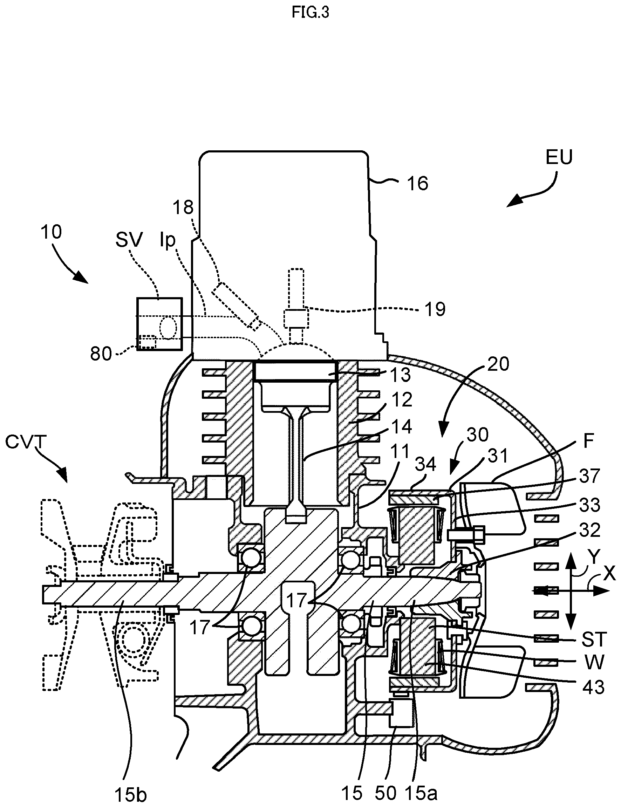

Fig 3 is a partial sectional view schematically illustrating a schematic configuration of an exposed engine unit EU illustrated in Fig. 2.

The exposed engine unit EU has the engine 10 and the permanent magnet motor 20.

The engine 10 includes a crankcase 11, a cylinder 12, a piston 13, a connecting rod 14, and a crankshaft 15. The piston 13 is disposed in a cylinder 12 in a reciprocally movable manner.

The crankshaft 15 is rotatably disposed in the crankcase 11. The crankshaft 15 is connected to the piston 13 via the connecting rod 14. A cylinder head 16 is attached to the upper part of the cylinder 12. A combustion chamber is defined by a cylinder 12, a cylinder head 16, and a piston 13. The crankshaft 15 is rotatably supported by the crankcase 11 via a pair of bearings 17. A permanent magnet motor 20 is attached to one end part 15a of the crankshaft 15. A transmission CVT is attached to the other end part 15b of the crankshaft 15. The transmission CVT changes the transmission ratio, a ratio of an output rotation speed to an input rotation speed. The transmission CVT changes the transmission ratio corresponding to a wheel rotation speed in relation to the rotation speed of the crankshaft 15.

The straddled vehicle 1 includes a clutch CL (see Fig. 2). The rotatory power output from the permanent magnet motor 20 and the engine 10 is supplied to the wheel 3b, a driving wheel, via the crankshaft 15 and the clutch CL. The clutch CL is connected to the transmission CVT. The clutch CL is a centrifugal clutch. The clutch CL switches between a transmission state where the rotatory power of the crankshaft 15 is transmitted to the wheel 3b, which is a driving wheel, and a blocked state. The clutch CL switches between the transmission state depending on the rotation speed of the crankshaft 15 and the blocked state. The clutch CL shifts to the blocked state when the rotation speed of the crankshaft 15 is lower than a predetermined threshold. The clutch CL shifts to the transmission state when the rotation speed of the crankshaft 15 is higher than a predetermined threshold. The predetermined threshold used herein does not always and not strictly mean a single constant value. The predetermined threshold may be a value that can vary depending on an environmental condition such as the ambient temperature and a running condition. Note that the blocked state refers to a state where the rotatory power is not transmitted at all from the crankshaft to the driving wheel. The transmission state refers to a state where the rotatory power is transmitted from the crankshaft to the driving wheel and includes a state where the rotatory power is partly transmitted.

The exposed engine unit EU includes a throttle valve SV and a fuel injection device 18. The throttle valve SV is disposed in an intake passage Ip connected to the engine 10. The throttle valve SV opens by an opening degree based on the operation amount of the acceleration instruction part 8 (see Fig. 2). The throttle valve SV is a mechanical throttle valve. The throttle valve SV is mechanically connected to the acceleration instruction part 8 via a cable (not illustrated). The throttle valve SV opens in conjunction with the operation received by the acceleration instruction part 8. The throttle valve SV opens by an opening degree depending on the operation amount of the acceleration instruction part 8. The throttle valve SV opens by an opening degree depending on the position of the acceleration instruction part 8.

The throttle valve SV supplies the air to the engine 10 in an amount depending on the opening degree. The throttle valve SV adjusts the amount of air supplied to the engine 10 by adjusting the amount of air flowing depending on the opening degree.

A throttle position sensor 80 that detects the opening degree of the throttle valve SV is disposed in the throttle valve SV. The throttle position sensor 80 outputs a signal indicating the opening degree of the throttle valve SV to the control device 60. The fuel injection device 18 supplies fuel to the combustion chamber by jetting the fuel. The fuel injection device 18 jets the fuel from the throttle valve SV to the air flowing through the intake passage. An air-fuel mixture of air and the fuel is supplied to the combustion chamber of the engine 10.

A spark plug 19 is disposed in the engine 10.

The engine 10 is an internal combustion engine. The engine 10 receives the fuel supply. The engine 10 outputs the rotatory power by the combustion operation for burning the air-fuel mixture (gas). That is, the piston 13 reciprocally moves by the combustion of the air-fuel mixture that includes the fuel supplied to the combustion chamber. The crankshaft 15 rotates in conjunction with the reciprocating movement of the piston 13. The rotatory power is output to the exterior of the engine 10 via the crankshaft 15. The wheel 3b (see Fig. 2) receives the rotatory power output from the engine 10 via the crankshaft 15 and drives the straddled vehicle 1.

The throttle valve SV adjusts the rotatory power of the engine 10 by adjusting the amount of air supplied to the combustion chamber. The amount of air supplied to the combustion chamber is adjusted depending on the opening degree of the throttle valve SV. The opening degree of the throttle valve SV is adjusted in response to the operation of the acceleration instruction part 8 (see Fig. 2).

The fuel injection device 18 adjusts the rotatory power output from the engine 10 by adjusting the amount of the supplied fuel. The fuel injection device 18 is controlled by a control device 60. The fuel injection device 18 is controlled such that fuel in an amount based on the air is supplied to the engine 10.

The engine 10 outputs the rotatory power via the crankshaft 15. The rotatory power of the crankshaft 15 is transmitted to the wheel 3b via the transmission CVT and the clutch CL (see Fig. 2). The straddled vehicle 1 is driven by the wheel 3b that receives the rotatory power from the engine 10 via the crankshaft 15.

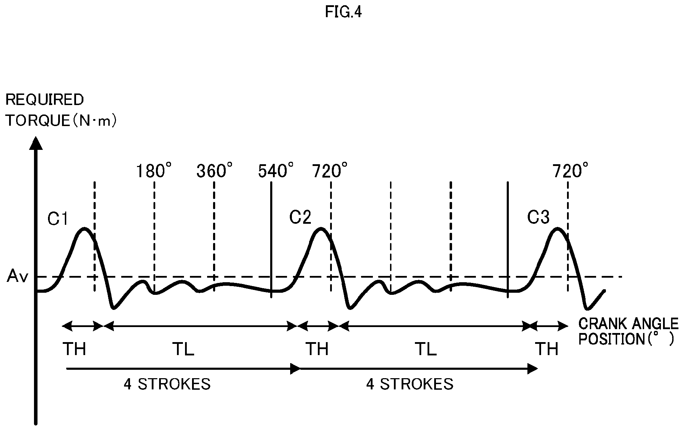

Fig. 4 is an explanatory view schematically illustrating the relationship between the crank angle position of the engine 10 and the required torque. Fig. 4 indicates a required torque for rotating the crankshaft 15 in a state where the engine 10 does not perform any combustion operation.

The engine 10 is a single-cylinder engine. The engine 10 is a four-stroke engine. The engine 10 has a high load region TH where the load for rotating the crankshaft 15 is high and a low load region TL where the load for rotating the crankshaft 15 is lower than the load of the high load region TH among the four strokes. The high load region refers to a region where a load torque is higher than the average value Av of the load torque in one combustion cycle among the entire single combustion cycle of the engine 10. When the rotation angle of the crankshaft 15 is seen as a standard, the low load region TL is larger than the high load region TH. More specifically, the low load region TL is larger than the high load region TH. In other words, the rotation angle region corresponding to the low load region TL is larger than the rotation angle region corresponding to the high load region TH. The engine 10 rotates while repeating an intake stroke, a compression stroke, a combustion stroke (expansion stroke), and an exhaust stroke. The compression stroke has an overlapping part with the high load region TH.

One combustion cycle or the engine 10 includes one each of an intake stroke, a compression stroke, a combustion stroke, and an exhaust stroke.

In the intake stroke, the air-fuel mixture in an amount depending on the opening degree of the throttle valve SV is supplied to the combustion chamber. In the compression stroke, the piston 13 compresses the air-fuel mixture in the combustion chamber. In the expansion stroke, the air-fuel mixture ignited by a spark plug 19 burns, and pushes the piston 13. In the exhaust stroke, the gas after combustion is exhausted from the combustion chamber as exhaust gas.

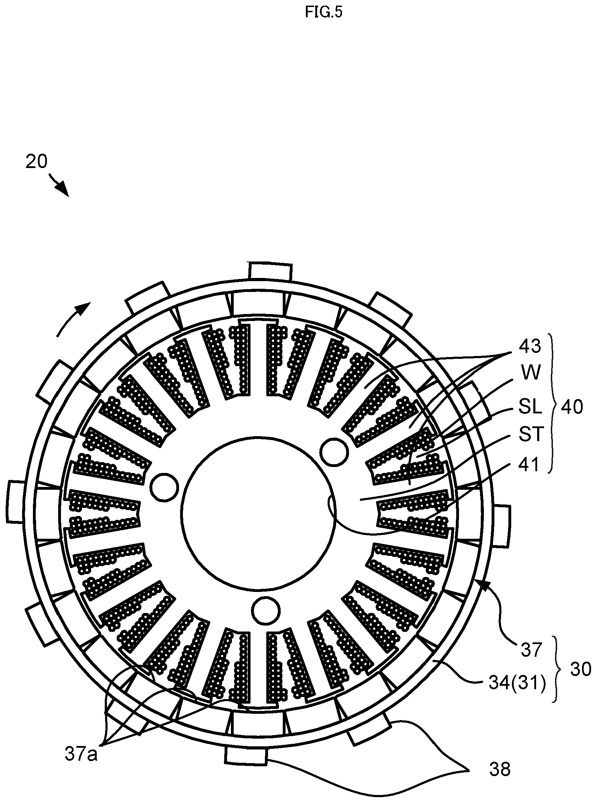

Fig. 5 is a sectional view illustrating a section perpendicular to the rotation axis of the permanent magnet motor 20 illustrated in Fig. 3.

The permanent magnet motor 20 is described referring to Figs. 3 and 5.

The permanent magnet motor 20 is a permanent magnet three-phase brushless motor. The permanent magnet motor 20 also serves as a permanent magnet three-phase brushless electric power generator.

The permanent magnet motor 20 includes the rotor 30 and the stator 40. The permanent magnet motor 20 in this embodiment is a radial gap motor. The permanent magnet motor 20 is an outer rotor motor. That is, the rotor 30 is an outer rotor. The stator 40 is an inner stator.

The rotor 30 has a rotor body 31. For example, the rotor body 31 is made of a ferromagnetic material. The rotor body 31 has a bottomed cylindrical shape. The rotor body 31 has a cylindrical boss part 32, a disk-shaped bottom wall part 33, and a cylindrical back yoke part 34. The bottom wall part 33 and the back yoke part 34 are integrally formed. Alternatively, the bottom wall part 33 and the back yoke part 34 may be configured as separated parts. The bottom wall part 33 and the back yoke part 34 are fixed to the crankshaft 15 via the cylindrical boss part 32. Windings to which current is supplied are not disposed on the rotor 30.

The rotor 30 has a permanent magnet 37. The rotor 30 has a plurality of magnetic pole parts 37a. The plurality of magnetic pole parts 37a are formed of the permanent magnet 37. The plurality of magnetic pole parts 37a are disposed on the inner circumferential surface of the back yoke part 34. In the present embodiment, the permanent magnet 37 has a plurality of permanent magnets. That is, the rotor 30 has a plurality of permanent magnets. The plurality of magnetic pole parts 37a are respectively disposed on the plurality of permanent magnets.

Alternatively, the permanent magnet 37 may be formed of a single ringshaped permanent magnet. In this case, a single permanent magnet is magnetically arranged such that a plurality of magnetic pole parts 37a are arranged along the inner circumferential surface.

The plurality of magnetic pole parts 37a are disposed such that N poles and S poles are alternately arranged in a circumferential direction of the permanent magnet motor 20. In the embodiment, the number of magnetic poles in the rotor 30 facing the stator 40 is 24. The number of magnetic poles of the rotor 30 refers to the number of magnetic poles facing the stator 40. No magnetic material is disposed between the magnetic pole parts 37a and the stator 40.

The magnetic pole parts 37a are disposed outward of the stator 40 in the radial direction of the permanent magnet motor 20. The back yoke part 34 is disposed outward of the magnetic pole parts 37a. The permanent magnet motor 20 has a larger number of magnetic pole parts 37a than the number of the teeth parts 43.

Note that the rotor 30 may be an embedded magnet type (IPM type) in which the magnetic pole parts 37a are embedded in a magnetic material but is preferably a surface magnet type (SPM type) in which the magnetic pole parts 37a are exposed from a magnetic material as the present embodiment.

A cooling fan F is disposed on the bottom wall part 33 constituting the rotor 30.

The stator 40 has a stator core ST and a plurality of stator windings W.

The stator core ST has a plurality of teeth parts (teeth) 43 disposed in the circumferential direction at intervals. The plurality of teeth parts 43 integrally extends outward in the radial direction from the stator core ST. In the present embodiment, a total of 18 teeth parts 43 are disposed in the circumferential direction at intervals. In other words, the stator core ST has a total of 18 slots SL disposed in the circumferential direction at intervals. The teeth parts 43 are disposed in the circumferential direction at regular intervals.

The rotor 30 has a larger number of magnetic pole parts 37a than the teeth parts 43. More specifically, the rotor 30 has magnetic pole parts 37a in the number of four-thirds or more of the number of the teeth parts 43. More specifically, the number of the magnetic pole parts is four-thirds of the slot numbers.

Stator windings W are wound around each teeth part 43. That is, a plurality of phases of stator windings W are disposed so as to pass through the slot SL. In Fig. 5, a state where the stator windings W are put in the slot SL is illustrated. Each of the plurality of phases of the stator windings W belongs to any one of a U-phase, a V-phase, and a W-phase. For example, the stator windings W are arranged such that the U-phase, the V-phase, and the W-phase are arranged in this order.

A plurality of detection subject parts 38 for detecting the rotation position of the rotor 30 are disposed on the outer surface of the rotor 30. The plurality of detection subject parts 38 are detected by magnetic action. The plurality of detection subject parts 38 are disposed on the outer surface of the rotor 30 in the circumferential direction at intervals. The detection subject parts 38 are formed of a ferromagnetic material.

The rotor position detection device 50 is a device that detects the position of the rotor 30. The rotor position detection device 50 is disposed at a position facing a plurality of detection subject parts 38.

The rotor 30 of the permanent magnet motor 20 is connected to the crankshaft 15 so as to rotate in response to the rotation of the crankshaft 15. Specifically, the rotor 30 is connected to the crankshaft 15 so as to rotate at a fixed speed ratio in relation to the crankshaft 15. The rotor 30 is directly connected to the crankshaft 15 of the engine 10.

In the present embodiment, the rotor 30 is attached to the crankshaft 15, not via a power transmission mechanism (for example, a belt, a chain, a gear, a speed reducer, a speed increaser, and the like). The rotor 30 rotates at a speed ratio of 1:1 with respect to the crankshaft 15. The permanent magnet motor 20 is configured such that the rotor 30 will positively rotate during the combustion operation of the engine 10.

The rotation axis of the permanent magnet motor 20 and the rotation axis of the crankshaft 15 substantially match.

The permanent magnet motor 20 positively rotates the crankshaft 15 to start the engine 10 at the engine starting. Furthermore, the permanent magnet motor 20 is driven by the engine 10 and generates electric power when the engine 10 performs combustion operation. That is, the permanent magnet motor 20 has both a function for starting the engine 10 by positively rotating the crankshaft 15 and a function for generating electric power by being driven by the engine 10 when the engine 10 performs the combustion operation. The permanent magnet motor 20 is positively rotated by the crankshaft 15 and serves as a generator for at least a part of the period after starting the engine 10.

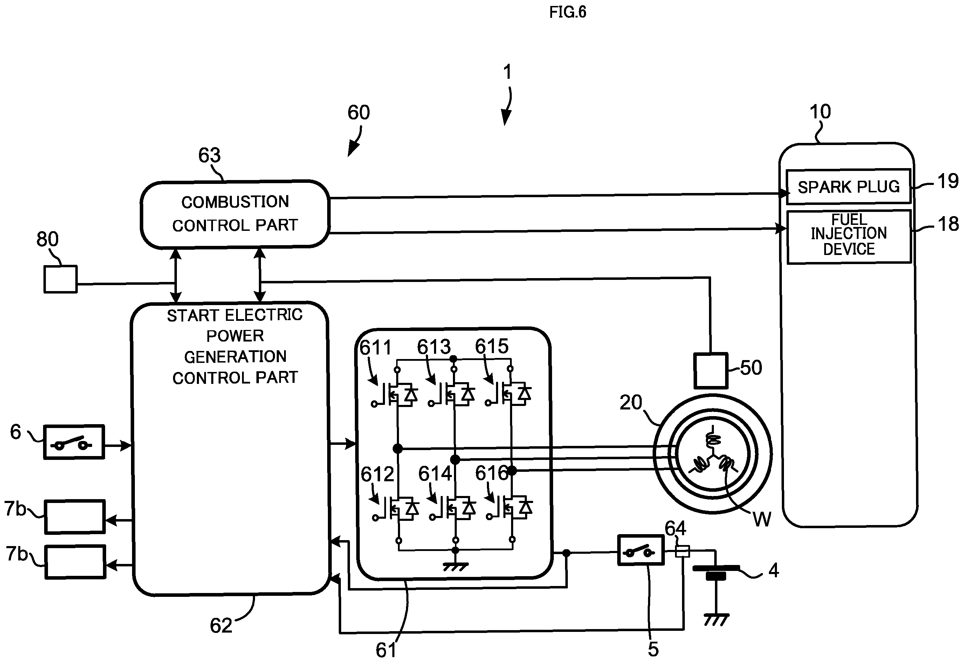

Fig. 6 is a block diagram illustrating an electrical schematic configuration of the straddled vehicle 1 illustrated in Fig. 2.

The straddled vehicle 1 includes an inverter 61. The control device 60 controls each part of the straddled vehicle 1, including the inverter 61.

The permanent magnet motor 20 and a battery 4 are connected to the inverter 61. The battery 4 supplies electric power to the permanent magnet motor 20 when the permanent magnet motor 20 operates as a motor. Furthermore, the battery 4 is charged with the electric power generated in the permanent magnet motor 20.

The battery 4 is connected to the inverter 61 and the electric power-consuming apparatus 70 via the main switch 5. The electric power-consuming apparatus 70 is an apparatus operating while consuming the electric power.

The inverter 61 includes a plurality of switching parts 611 to 616. The inverter 61 of the present embodiment has six switching parts 611 to 616.

The switching parts 611 to 616 constitute a three-phase bridge inverter. The plurality of switching parts 611 to 616 are respectively connected to the respective phase of the plurality of phases of stator windings W. More specifically, two switching parts connected in series out of the plurality of switching parts 611 to 616 constitute a half-bridge. A half-bridge of each phase is connected parallelly to the battery 4. The switching parts 611 to 616 constituting the half-bridges of each phase are respectively connected to the respective phase of the plurality of phases of stator windings W.

The switching parts 611 to 616 control the current flowing between the battery 4 and the permanent magnet motor 20. Specifically, the switching parts 611 to 616 switch the passage and the block of the current between the battery 4 and the plurality of phases of the stator windings W.

Specifically, when the permanent magnet motor 20 functions as a motor, current passage and non-current passage of each of the plurality of phases of the stator windings W are switched by the on/off operation of the switching parts 611 to 616.

Alternatively, when the permanent magnet motor 20 functions as a generator, passage and block of the current between each of the stator windings W and the battery 4 are switched by the on/off operation of the switching parts 611 to 616. By sequentially switching the on and off of the switching parts 611 to 616, the three-phase alternating current output from the permanent magnet motor 20 is rectified, and the voltage is controlled. The switching parts 611 to 616 control the current output from the permanent magnet motor 20 to the battery 4.

Each of the switching parts 611 to 616 has a switching part. For example, the switching part is a transistor. More specifically, the switching part is a FET (Field Effect Transistor).

The fuel injection device 18, the spark plug 19, and battery 4 are connected to the control device 60. In addition, the throttle position sensor 80 is connected to the control device 60. The control device 60 acquires the opening degree of the throttle valve SV on the basis of the detection result of the throttle position sensor 80. The opening degree of the throttle valve SV indicates the operation amount of the acceleration instruction part 8. The control device 60 acquires the operation amount of the acceleration instruction part 8 and the increasing speed of the operation amount on the basis of the detection result of the throttle position sensor 80.

Furthermore, the rotor position detection device 50 is connected to the control device 60. The control device 60 acquires the rotation speed of the crankshaft 15 on the basis of the detection result of the rotor position detection device 50.

The control device 60 includes a start electric power generation control part 62 and a combustion control part 63.

The start electric power generation control part 62 controls the operation of the permanent magnet motor 20 by controlling the on/off operation of each of the switching parts 611 to 616.

The combustion control part 63 controls the combustion operation of the engine 10 by controlling the spark plug 19 and the fuel injection device 18. The combustion control part 63 controls the rotatory power of the engine 10 by controlling the spark plug 19 and the fuel injection device 18. The combustion control part 63 controls the spark plug 19 and the fuel injection device 18 depending on the opening degree of the throttle valve SV represented in the output signal of the throttle position sensor 80.

The control device 60 is constituted of a computer having a central processing unit (not illustrated) and a storage device (not illustrated). The central processing unit performs arithmetic processing on the basis of a control program. The storage device stores data relating to programs and arithmetic operations.

The start electric power generation control part 62 and combustion control part 63 are implemented by a computer (not illustrated) and control programs executed in the computer. Accordingly, the operations of the start electric power generation control part 62 and the combustion control part 63 are each referred to as the operation of the control device 60. Note that, for example, the start electric power generation control part 62 and the combustion control part 63 may be formed in positions mutually separated as mutually independent devices or may be formed integrally.

The starter switch 6 is connected to the control device 60. The starter switch 6 is operated by a driver when the engine 10 is starting. The start electric power generation control part 62 of the control device 60 detects the charged level of the battery 4. The start electric power generation control part 62 detects the charged level of the battery 4 by detecting the voltage and the current of the battery 4.

The main switch 5 supplies electric power to the control device 60 in response to the operation.

The start electric power generation control part 62 and combustion control part 63 of the control device 60 control the engine 10 and the permanent magnet motor 20. The start electric power generation control part 62 controls the inverter 61.

The assist display device 7a and the regenerative display device 7b are also connected to the control device 60.

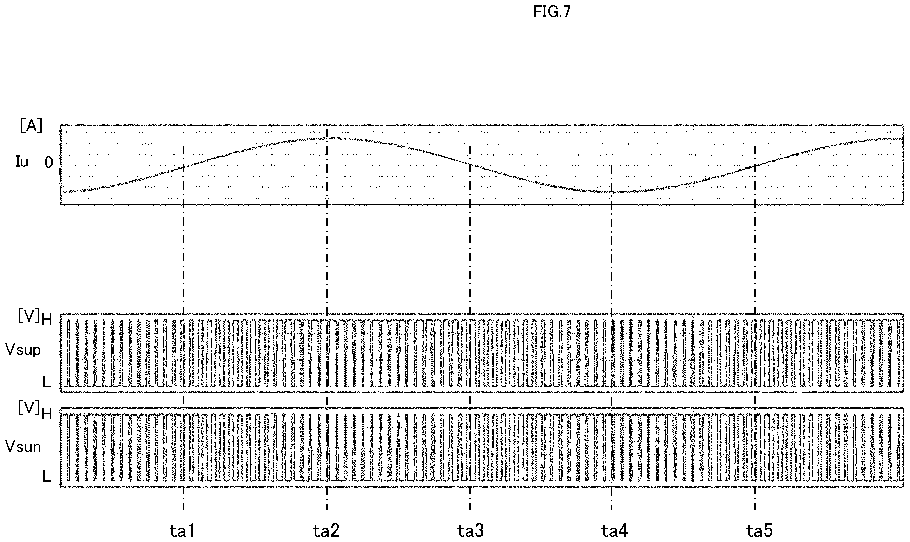

Fig. 7 is a diagram illustrating an example of waveforms of current and voltage in control. Fig. 7 illustrates an example of a waveform of current and voltage in sine wave control.

In Fig. 7, Iu indicates a current to be flown in the stator windings W of the U-phase among the plurality of phases of the stator windings W of the permanent magnet motor 20. In power-running, the inverter 61 flows a current synchronized with the change of the induced electromotive voltage into the stator windings W. That is, the inverter 61 flows a current having an equal frequency to the induced electromotive voltage into the stator windings W. In Fig. 7, the positive value in Iu represents that a current flows from the switching parts 611 and 612 to the stator windings W at the end of the stator windings W. The negative value in Iu represents that a current flows from the stator windings W to the switching parts 611 and 612.

Vsup and Vsun respectively represent control signals of two switching parts 611 and 612 connected to the stator windings of the U-phase out of the plurality of switching parts 611 to 616. Vsup is a control signal of the positive switching part 611 disposed between the stator windings W of the U-phase and the positive electrode of the battery 4. Vsup is a control signal of the negative switching part 612 disposed between the stator windings W of the U-phase and the negative electrode of battery 4. The H-level in the Vsup and the Vsun represents an on-state of the switching parts 611 and 612. The L-level indicates an off-state.

The plurality of switching parts 611 to 616 perform the on/off operation at a carrier frequency higher than the induced electromotive voltage.

As illustrated in the control signals Vsup and Vsun of the switching parts 611 and 612, the positive switching part 611 and the negative switching part 612 become mutually opposite states in an on-state and an off-state.

The control device 60 controls the duty ratio of on and off of the switching parts 611 and 612 such that sine wave currents flow into each phase of the stator windings W. The control device 60 controls the switching parts 611 and 612 such that the period of change of the duty ratio of on and off of the switching parts 611 and 612 will be a period of the induced electromotive voltage of the stator windings W. The induced electromotive voltage of the stator windings W is a sine wave, and a median "0" (timings ta1 and ta5), a maximum positive value (timing ta2), a median "0" (timing ta3), and a maximum negative value (timing ta4) are repeated.

When the carrier frequency at which the plurality of switching parts 611 to 616 perform the on/off operation is included in a range of over 4 kHz and below 16 kHz, the operation sound tends to be easily heard by the human ear. When the carrier frequency is included in the outside of a range of over 4 kHz and below 16 kHz, the operation sound cannot be heard by the human ear or the magnitude of the operation sound that can be heard by the human ear is reduced.

Fig. 7 illustrates an operation in the case of power-running. Meanwhile, in power generation, the duty ratio is determined such that the current Iu flows in the opposite direction.

In addition, Fig. 7 illustrates an operation in the case of sine wave control (vector control). Meanwhile, in simple PWM, the duty ratio is determined such that the current Iu will not be a sine wave but be a square wave. In this case, the duty ratio is set to one target value. The target value is set according to the required torque.

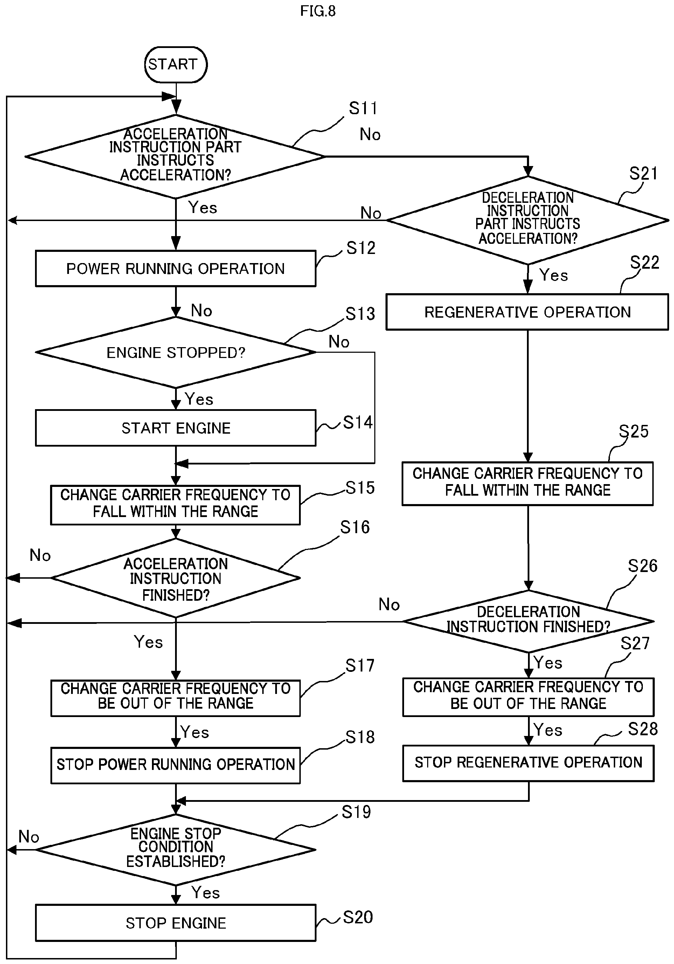

Fig. 8 is a flowchart for explaining the operation of the straddled vehicle 1.

The operation of the straddled vehicle 1 is described referring to Fig. 6 and Fig. 8. The operation of the straddled vehicle 1 is controlled by the control device 60.

The control device 60 determines the presence or absence of acceleration instruction made by the acceleration instruction part 8 (S11).

When an acceleration instruction made by the acceleration instruction part 8 is present, the control device 60 allows the permanent magnet motor 20 to perform a power-running operation (S12). The control device 60 controls the inverter 61 so that the permanent magnet motor 20 will drive the engine 10. When an acceleration instruction made by the acceleration instruction part 8 is present, the control device 60 increases the supply amount of the air and the fuel to the engine 10. Due to this step, both the engine 10 and the permanent magnet motor 20 accelerate the straddled vehicle 1.

When the engine 10 stops (Yes in S13), the control device 60 starts the engine 10. The control device 60 performs a combustion operation of the engine 10 (S14). Specifically, the combustion control part 63 allows the engine 10 to perform the combustion operation. The combustion control part 63 starts supplying fuel to the fuel injection device 18. The combustion control part 63 allows the spark plug 19 to start ignition. After that, the combustion control part 63 controls the fuel supply amount from the fuel injection device 18 depending on the amount of air supplied from the throttle valve SV.

The control device 60 changes the carrier frequency to fall within a range of over 4 kHz and below 16 kHz (S15). Due to this step, the switching parts 611 to 616 perform the on/off operation at a frequency within the range of over 4 kHz and below 16 kHz. At this time, the control device 60 turns on the light of the assist display device 7a.

When the operating frequency of the switching parts 611 to 616 of the inverter 61 becomes within a range of over 4 kHz and below 16 kHz, the operation sound can be heard by a rider. Accordingly, a rider can be informed that the acceleration is conducted in an easy-to-understand manner while the rider is driving.

A rider can be informed that the straddled vehicle 1 is accelerated in an easy-to-understand manner by the change of the visual displays on the assist display device 7a. In a case of a configuration including the regenerative display device 7b, a rider can be informed that the straddled vehicle 1 is regenerating in an easy-to-understand manner by the change of the visual displays on the regenerative display device 7b.

The control device 60 determines whether or not the acceleration instruction made by the acceleration instruction part 8 is finished (S16).

When the acceleration instruction made by the acceleration instruction part 8 is finished (Yes in S16), the control device 60 changes the carrier frequency to be the outside of the range of over 4 kHz and below 16 kHz (S17). More specifically, the control device 60 changes the carrier frequency to over 16 kHz. Note that the control device 60 may be transferred to a phase control mode in step S17. In this case, the operating frequency is changed to 4 kHz or lower. For example, the control device 60 may determine whether the carrier frequency is changed to over 16 kHz or below 4 kHz depending on the rotation speed of the permanent magnet motor 20 when the acceleration instruction is finished (Yes in S16).

The control device 60 turns off the light of the assist display device 7a.

The control device 60 stops the power-running operation by the permanent magnet motor 20 (S18). For example, the control device 60 controls the inverter 61 such that the permanent magnet motor 20 generates electric power. The battery 4 is charged by the electric power generation of the permanent magnet motor 20. For charging, there is PWM control or phase control. For example, the control device 60 selects a control on the basis of the rotation speed of the permanent magnet motor 20 and the state of the acceleration instruction part 8. Note that, in the case of phase control, the operating frequency is below 4 kHz.

Note that, after that, when the acceleration is instructed by the acceleration instruction part 8 while the straddled vehicle 1 is still in motion (No in S11 and S13), the control device 60 changes again the carrier frequency within the range of over 4 kHz and below 16 kHz (S15).

The control device 60 determines whether or not the engine stop condition is established (S19).

When the engine stop condition is established, the control device 60 stops the engine 10 (S20).

The control device 60 determines the presence or absence of deceleration instruction made by the acceleration instruction part 8 (S21).

When a further deceleration instruction made by the acceleration instruction part 8 that has stopped the acceleration instruction is present, the control device 60 allows the permanent magnet motor 20 to perform a regenerative operation (S22). The control device 60 controls the inverter 61 so that the permanent magnet motor 20 drives the engine 10. The battery 4 is charged by the electric power generation. The regenerative operation is an electric power-generating operation for actively decelerating the straddled vehicle 1. More specifically, the regenerative operation is an operation for generating electric power enough to decelerate the straddled vehicle 1 even when the engine 10 is operating. The regenerative operation is mainly performed in a PWM control mode. The regenerative operation is different from the electric power generation in a phase control mode in which electric power is generated by driving the engine 10 so that the straddled vehicle 1 is not decelerated.

The control device 60 changes the carrier frequency to fall within a range of over 4 kHz and below 16 kHz (S15). Due to this step, the switching parts 611 to 616 perform the on/off operation at a frequency within the range of over 4 kHz and below 16 kHz. At this time, the control device 60 turns on the light of the regenerative display device 7b.

When the operating frequency of the switching parts 611 to 616 of the inverter 61 becomes within a range of over 4 kHz and below 16 kHz, the operation sound can be heard by a rider. Accordingly, a rider can be informed that regeneration is performed in an easy-to-understand manner even while the rider is driving.

A rider can be informed that the straddled vehicle 1 is regenerated in an easy-to-understand manner by the change of the visual displays on the regenerative display device 7b.

The control device 60 determines whether or not the deceleration instruction made by the acceleration instruction part 8 is finished (S26).

When the deceleration instruction made by the acceleration instruction part 8 is finished (Yes in S26), the control device 60 changes the carrier frequency to be the outside of the range of over 4 kHz and below 16 kHz (S27). More specifically, the control device 60 changes the operating frequency to 4 kHz. At this time, the control device 60 turns off the light of the regenerative display device 7b.

The control device 60 stops the regenerative operation by the permanent magnet motor 20 (S28). For example, the control device 60 controls the inverter 61 such that the permanent magnet motor 20 generates electric power in a phase control mode. The battery 4 is continuously charged by the electric power generation of the permanent magnet motor 20 in a phase control mode.

Changes in the carrier frequency F1 illustrated in the part (b) of Fig. 1 implement the operations described referring to Fig. 8.

However, changes of the carrier frequency F3 or F4 illustrated in the part (b) of Fig. 1 can be implemented by changing the determining subject of the step S16, for example, to the progress of a predetermined time from a time when the carrier frequency is changed to fall within the range of over 4 kHz and below 16 kHz.

In addition, changes of the carrier frequency F2 illustrated in t1 to t3 and t5 to t6 of the part (b) of Fig. 1 can be implemented by making a configuration such that, in the processing of the step S15, the carrier frequency gradually increases with time passage within the range of over 4 kHz and below 16 kHz. Furthermore, changes of the carrier frequency F2 illustrated in t7 to t8 of the part (b) of Fig. 1 can be implemented by making a configuration such that, in the processing of the step S25, the carrier frequency gradually decreases with time passage within the range of over 4 kHz and below 16 kHz. In this case, a configuration wherein the carrier frequency is changed, for example, depending on the rotation speed of the engine 10 or the vehicle speed may be adopted.

### [Description of the Reference Numerals]

- 1: Straddled vehicle
- 3b: Wheel (driving wheel)
- 4: Battery
- 8: Acceleration instruction part
- 10: Engine
- 15: Crankshaft
- 20: Permanent magnet motor
- 30: Rotor
- 37: Permanent magnet
- 40: Stator
- 60: Control device
- 61: Inverter
- 611-616: Switching parts

## Claims

1. A straddled vehicle (1) comprising:
an engine (10) that has a crankshaft (15) and configured to output power via the crankshaft (15);
a driving wheel (3b) configured to receive a rotatory power output from the engine (10) via the crankshaft (15), thereby driving the straddled vehicle (1);
an acceleration instruction part (8) configured to instruct acceleration of the straddled vehicle (1) in accordance with a rider's operation;
a permanent magnet motor (20) having a rotor (30) directly or indirectly connected to the crankshaft (15) so as to rotate in response to rotation of the crankshaft (15) and a permanent magnet (37) provided to the rotor (30);
a battery (4); and
an inverter (61) provided with a plurality of switching parts (611 - 616) configured to control a current that flows between the battery (4) and the permanent magnet motor (20) by switching operation,
wherein the straddled vehicle (1) comprises a control device (60) configured to:
control the engine (10) such that a rotation speed of the engine (10) increases while the acceleration instruction part (8) is instructing acceleration,
while the acceleration instruction part (8) is instructing acceleration, change an operating frequency of the inverter (61) such that the operating frequency of the inverter (61) falls within a range over 4 kHz but below 16 kHz from the outside of the range to assist the engine's acceleration, thereby performing power-running control of the permanent magnet motor (20),
to thereby control both the engine (10) and the permanent magnet motor (20) to accelerate the straddled vehicle (1).

2. The straddled vehicle (1) according to claim 1, wherein
the control device (60) is configured to increase the operating frequency of the inverter (61) from 0 kHz to fall within the range of over 4 kHz and below 16 kHz when the acceleration instruction part (8) instructs acceleration in a state where the straddled vehicle (1) is not in motion.

3. The straddled vehicle (1) according to claim 1 or 2, wherein
the control device (60) is configured to decrease the operating frequency of the inverter (61) from a range of over 16 kHz to the range of over 4 kHz and below 16 kHz when the acceleration instruction part (8) instructs acceleration in a state where the straddled vehicle (1) is in motion.

4. The straddled vehicle (1) according to any one of claims 1 to 3, further comprising:
a display device (7a) configured to present a visual display, wherein
the control device (60) is configured to change
a display state of the display device (7a) while the acceleration instruction part (8) is instructing acceleration.

5. The straddled vehicle (1) according to any one of claims 1 to 4, further comprising:
when the operating frequency of the inverter (61) is within a range of over 4 kHz and below 16 kHz, the operating frequency of the inverter (61) is increased to 16 kHz or higher when an acceleration instruction by the acceleration instruction part (8) is stopped.

6. The straddled vehicle (1) according to claims 1 to 5, wherein
the control device (60) is configured to change the operating frequency of the inverter (61) such that the operating frequency of the inverter (61) falls within a range of over 4 kHz and below 16 kHz while the acceleration instruction part (8) is instructing deceleration from the outside of the range.

## Patentansprüche

1. Ein Spreizsitzfahrzeug (1), das folgende Merkmale aufweist:
ein Triebwerk (10), das eine Kurbelwelle (15) aufweist und dazu konfiguriert ist, Leistung über die Kurbelwelle (15) auszugeben;
ein Antriebsrad (3b), das dazu konfiguriert ist, eine Rotationsleistung, die von dem Triebwerk (10) über die Kurbelwelle (15) ausgegeben wird, zu empfangen, wodurch das Spreizsitzfahrzeug (1) angetrieben wird;
ein Beschleunigungsanweisungsteil (8), das dazu konfiguriert ist, eine Beschleunigung des Spreizsitzfahrzeugs (1) gemäß dem Betrieb durch einen Fahrer anzuweisen;
einen Permanentmagnetmotor (20), der einen Rotor (30), der direkt oder indirekt mit der Kurbelwelle (15) verbunden ist, um sich ansprechend auf eine Rotation der Kurbelwelle (15) zu drehen, und einen Permanentmagneten (37) aufweist, mit dem der Rotor (30) versehen ist;
eine Batterie (4); und
einen inverter (61), der mit einer Mehrzahl von Schaltungsteilen (611-616) versehen ist, die dazu konfiguriert sind, einen Strom, der zwischen der Batterie (4) und dem Permanentmagnetmotor (20) fließt, durch eine Schaltoperation zu steuern,
wobei das Spreizsitzfahrzeug (1) eine Steuervorrichtung (60) aufweist, die konfiguriert ist zum:
Steuern des Triebwerks (10), so dass eine Drehgeschwindigkeit des Triebwerks (10) ansteigt, während das Beschleunigungsanweisungsteil (8) eine Beschleunigung anweist,
während das Beschleunigungsanweisungsteil (8) eine Beschleunigung anweist, Ändern einer Betriebsfrequenz des Inverters (61), so dass die Betriebsfrequenz des Inverters (61) von außerhalb des Bereichs in einen Bereich von über 4 kHz aber unter 16 kHz fällt, um die Beschleunigung des Triebwerks zu unterstützen, wodurch eine Leistungslaufsteuerung des Permanentmagnetmotors (20) durchgeführt wird,
um damit sowohl das Triebwerk (10) als auch den Permanentmagnetmotor (20) dahingehend zu steuern, das Spreizsitzfahrzeug (1) zu beschleunigen.

2. Das Spreizsitzfahrzeug (1) gemäß Anspruch 1, bei dem
die Steuervorrichtung (60) dazu konfiguriert ist, die Betriebsfrequenz des Inverters (61) von 0 kHz zu erhöhen, sodass dieselbe in einen Bereich von über 4 kHz und unter 16 kHz fällt, wenn das Beschleunigungsanweisungsteil (8) eine Beschleunigung in einem Zustand anweist, in dem das Spreizsitzfahrzeug (1) nicht in Bewegung ist.

3. Das Spreizsitzfahrzeug (1) gemäß Anspruch 1 oder 2, bei dem
die Steuervorrichtung (60) dazu konfiguriert ist, die Betriebsfrequenz des Inverters (61) von einem Bereich über 16 kHz auf einen Bereich über 4 kHz und unter 16 kHz zu reduzieren, wenn das Beschleunigungsanweisungsteil (8) eine Beschleunigung in einem Zustand anweist, in dem das Spreizsitzfahrzeug (1) in Bewegung ist.

4. Das Spreizsitzfahrzeug (1) gemäß einem der Ansprüche 1 bis 3, das ferner folgende Merkmale aufweist:
eine Anzeigevorrichtung (7a), die dazu konfiguriert ist, eine visuelle Anzeige darzustellen, wobei
die Steuervorrichtung (60) dazu konfiguriert ist,
einen Anzeigezustand der Anzeigevorrichtung (7a) zu verändern, während das Beschleunigungsanweisungsteil (8) eine Beschleunigung anweist.

5. Das Spreizsitzfahrzeug gemäß einem der Ansprüche 1 bis 4, das ferner Folgendes aufweist:
wenn die Betriebsfrequenz des Inverters (61) innerhalb eines Bereichs von über 4 kHz und unter 16 kHz liegt, wird die Betriebsfrequenz des Inverters (61) auf 16 kHz oder mehr erhöht, wenn eine Beschleunigungsanweisung durch das Beschleunigungsanweisungsteil (8) gestoppt wird.

6. Das Spreizsitzfahrzeug (1) gemäß Ansprüchen 1 bis 5, bei dem
die Steuervorrichtung (60) dazu konfiguriert ist, die Betriebsfrequenz des Inverters (61) derart zu ändern, dass die Betriebsfrequenz des Inverters (61) von außerhalb des Bereichs in einen Bereich von über 4 kHz und unter 16 kHz fällt, während das Beschleunigungsanweisungsteil (8) eine Verlangsamung anweist.

## Revendications

1. Véhicule à selle (1) comprenant:
un moteur (10) qui présente un vilebrequin (15) et est configuré pour sortir de l'énergie par l'intermédiaire du vilebrequin (15);
une roue d'entraînement (3b) configurée pour recevoir une énergie de rotation sortie du moteur (10) par l'intermédiaire du vilebrequin (15), entraînant ainsi le véhicule à selle (1);
une partie d'instructions d'accélération (8) configurée pour donner des instructions pour l'accélération du véhicule à selle (1) selon une opération par un conducteur;
un moteur à aimant permanent (20) présentant un rotor (30) connecté directement ou indirectement au vilebrequin (15) de manière à tourner en réaction à la rotation du vilebrequin (15) et un aimant permanent (37) prévu sur le rotor (30);
une batterie (4); et
un onduleur (61) pourvu d'une pluralité de parties de commutation (611 à 616) configuré pour contrôler un courant qui circule entre la batterie (4) et le moteur à aimant permanent (20) par une opération de commutation,
dans lequel le véhicule à selle (1) comprend un dispositif de commande (60) configuré pour:
commander le moteur (10) de sorte qu'une vitesse de rotation du moteur (10) augmente tandis que la partie d'instruction d'accélération (8) donne des instructions pour l'accélération,
tandis que la partie d'instruction d'accélération (8) donne des instructions pour l'accélération, modifier une fréquence de fonctionnement de l'onduleur (61) de sorte que la fréquence de fonctionnement de l'onduleur (61) se situe dans une plage de plus de 4 kHz, mais de moins de 16 kHz, à partir de l'extérieur de la plage, pour assister l'accélération du moteur, effectuant ainsi une commande de fonctionnement du moteur à aimant permanent (20),
pour commander ainsi tant le moteur (10) que le moteur à aimant permanent (20) pour accélérer le véhicule à selle (1).

2. Véhicule à selle (1) selon la revendication 1, dans lequel
le dispositif de commande (60) est configuré pour augmenter la fréquence de fonctionnement de l'onduleur (61) à partir de 0 kHz pour se situer dans la plage de plus de 4 kHz et de moins de 16 kHz lorsque la partie d'instruction d'accélération (8) donne des instructions pour une accélération dans un état dans lequel le véhicule à selle (1) n'est pas en mouvement.

3. Véhicule à selle (1) selon la revendication 1 ou 2, dans lequel
le dispositif de commande (60) est configuré pour diminuer la fréquence de fonctionnement de l'onduleur (61) d'une plage de plus de 16 kHz à la plage de plus de 4 kHz et de moins de 16 kHz lorsque la partie d'instruction d'accélération (8) donne des instructions pour une accélération dans un état où le véhicule à selle (1) est en mouvement.

4. Véhicule à selle (1) selon l'une quelconque des revendications 1 à 3, comprenant par ailleurs:
un dispositif d'affichage (7a) configuré pour présenter un affichage visuel, dans lequel
le dispositif de commande (60) est configuré pour changer
un état d'affichage du dispositif d'affichage (7a) tandis que la partie d'instruction d'accélération (8) donne des instructions pour une accélération.

5. Véhicule à selle (1) selon l'une quelconque des revendications 1 à 4, comprenant par ailleurs:
lorsque la fréquence de fonctionnement de l'onduleur (61) se situe dans une plage de plus de 4 kHz et de moins de 16 kHz, la fréquence de fonctionnement de l'onduleur (61) est augmentée à 16 kHz ou plus lorsqu'une instruction d'accélération par la partie d'instruction d'accélération (8) est arrêtée.

6. Véhicule à selle (1) selon les revendications 1 à 5, dans lequel le dispositif de commande (60) est configuré pour modifier la fréquence de fonctionnement de l'onduleur (61) de sorte que la fréquence de fonctionnement de l'onduleur (61) se situe dans une plage de plus de 4 kHz et de moins de 16 kHz tandis que la partie d'instruction d'accélération (8) donne des instructions pour une décélération à partir de l'extérieur de la plage.
